# EUROPÄISCHE PATENTANMELDUNG

(11) **EP 4 464 582 A1**
(43) Veröffentlichungstag der Anmeldung: **20.11.2024**
(21) Anmeldenummer: 24176166.7
(22) Anmeldetag: 16.05.2024
(51) Int. Cl.: B62M 6/55, B62M 11/14, B62M 11/18

(54) **TRETLAGERGETRIEBE IN PLANETENBAUWEISE FÜR EIN FAHRRAD ODER EIN PEDELEC**

(30) Priorität: 17.05.2023 DE 102023204595
(71) Anmelder: ZF Friedrichshafen AG, 88046 Friedrichshafen (DE)
(72) Erfinder: Beck, Stefan, 88097 Eriskirch (DE); Wechs, Michael, 88138 Weißensberg (DE); Kutter, Fabian, 88079 Kressbronn (DE); Martin, Thomas, 88138 Weissensberg (DE); Radic, Mladjan, 89173 Lonsee (DE); Riedisser, Thomas, 88138 Sigmarszell (DE); Doepfert, Hagen, 88131 Lindau (DE)
(74) Vertreter: ZF Friedrichshafen AG

(57) **Zusammenfassung**

Es wird ein Tretlagergetriebe in Planetenbauweise für ein Fahrrad oder ein Pedelec (1) mit einer Getriebeeingangswelle (WAn) als Antrieb, mit einer Getriebeausgangswelle (WAb) als Abtrieb, mit einem mehrstufigen Hauptgetriebe (3) und mit zumindest einer Getriebeschaltgruppe (4) vorgeschlagen, wobei die Getriebeschaltgruppe (4) zwei Planetenradsätze (RS1, RS2) und vier Schaltelemente (B1, B2, K1, K2) aufweist, wobei ein zweites Element des ersten Planetenradsatzes (RS1) mit einer ersten Welle (W1) verbunden ist, wobei ein drittes Element des ersten Planetenradsatzes (RS1) über eine vierte Welle (W4) mit einem zweiten Element des zweiten Planetenradsatzes (RS2) verbunden ist, wobei ein erstes Element des ersten Planetenradsatzes (RS1) mit einer fünften Welle (W5) verbunden ist, wobei ein erstes Element des zweiten Planetenradsatzes (RS2) über eine dritte Welle (W3) und über ein zweites als Bremse ausgeführtes Schaltelement (B2) festsetzbar ist, wobei die dritte Welle (W3) über ein sechstes als Kupplung oder Freilauf ausgeführtes Schaltelement (K2) mit der fünften Welle (W5) verbindbar ist, wobei ein drittes Element des zweiten Planetenradsatzes (RS2) über eine zweite Welle (W2) und über ein erstes als Bremse ausgeführtes Schaltelement (B1) festsetzbar ist und wobei die zweite Welle (W2) über ein fünftes als Kupplung oder Freilauf ausgeführtes Schaltelement (K1) mit der ersten Welle (W1) verbindbar ist. Ferner wird ein Fahrrad oder Pedelec (1) mit einem Tretlagergetriebe vorgeschlagen.

## Beschreibung

Die vorliegende Erfindung betrifft ein Tretlagergetriebe in Planetenbauweise für ein Fahrrad oder ein Pedelec mit einer Getriebeeingangswelle als Antrieb und einer Getriebeausgangswelle als Abtrieb, mit einem mehrstufigen Hauptgetriebe und mit zumindest einer Getriebeschaltgruppe. Ferner betrifft die Erfindung ein Fahrrad oder Pedelec mit dem Tretlagergetriebe.

Beispielsweise aus der Druckschrift DE 10 2018 208 380 A1 ist ein 16 Gang-Tretlagergetriebe in Planetenbauweise für ein Fahrrad oder ein Pedelec mit einem viergängigen Hauptgetriebe bekannt, dem ein Vorschaltradsatz und ein Nachschaltradsatz mit jeweils zwei Gangstufen zugeordnet sind.

Der vorliegenden Erfindung liegt die Aufgabe zugrunde, ein Tretlagergetriebe und ein Fahrrad oder Pedelec mit dem Tretlagergetriebe vorzuschlagen, welche einen möglichst geringen Bauaufwand mit gegenüber dem Stand der Technik verbesserten Eigenschaften aufweisen.

Diese Aufgabe wird erfindungsgemäß durch die Merkmale des Patentanspruches 1 bzw. 15 gelöst. Vorteilhafte und beanspruchte Weiterbildungen ergeben sich aus den Unteransprüchen und der Beschreibung sowie den Zeichnungen.

Somit wird ein Tretlagergetriebe in Planetenbauweise für ein Fahrrad oder ein Pedelec mit einer Getriebeeingangswelle als Antrieb mit einer Getriebeausgangswelle als Abtrieb, mit einem mehrstufigen Hauptgetriebe und mit zumindest einer Getriebeschaltgruppe vorgeschlagen, wobei die Getriebeschaltgruppe zwei Planetenradsätze und vier Schaltelemente aufweist, wobei ein zweites Element des ersten Planetenradsatzes mit einer ersten Welle verbunden ist, wobei ein drittes Element des ersten Planetenradsatzes über eine vierte Welle mit einem zweiten Element des zweiten Planetenradsatzes verbunden ist, wobei ein erstes Element des ersten Planetenradsatzes mit einer fünften Welle verbunden ist, wobei ein erstes Element des zweiten Planetenradsatzes über eine dritte Welle und über ein zweites als Bremse ausgeführtes Schaltelement festsetzbar ist, wobei die dritte Welle über ein sechstes als Kupplung oder Freilauf ausgeführtes Schaltelement mit der fünften Welle verbindbar ist, wobei ein drittes Element des zweiten Planetenradsatzes über eine zweite Welle und über ein erstes als Bremse ausgeführtes Schaltelement festsetzbar ist und wobei die zweite Welle über ein fünftes als Kupplung oder Freilauf ausgeführtes Schaltelement mit der ersten Welle verbindbar ist.

Auf diese Weise wird mit der vorbeschriebenen Anbindung der Getriebeschaltgruppe bei dem vorgeschlagenen Tretlagergetriebe mit nur zwei vorgesehenen Planetenradsätzen und nur vier vorgesehenen Schaltelementen bei der Getriebeschaltgruppe ein besonders einfacher und kompakter Aufbau bei dem Tretlagergetriebe realisiert. Hinzu kommen besonders geringe Bauteilbelastungen und ein vorteilhaft hoher Verzahnungswirkungsgrad aufgrund der geometrischen Übersetzungsreihe bei dem Tretlagergetriebe.

Zur mechanischen Verbindung von Elementen der beiden Planetenradsätze bei der Getriebeschaltgruppe werden vorzugsweise neben Antrieb und Abtrieb nur fünf weitere Wellen oder wellenartige Elemente verwendet, wobei unter dem Begriff Welle nicht ausschließlich ein zylindrisches, drehbar gelagertes Maschinenelement zur Übertragung von Drehmomenten zu verstehen ist, sondern vielmehr sind hierunter auch allgemeine Verbindungselemente zu verstehen, die die einzelnen Radsatzelemente miteinander zur Drehmomentübertragung verbinden.

Die axiale Reihenfolge von Hauptgetriebe und Getriebeschaltgruppe kann bei dem vorgeschlagenen Tretlagergetriebe vertauscht werden. Demzufolge ist die Getriebeschaltgruppe zwischen der Getriebeeingangswelle und der Getriebeausgangswelle dem Hauptgetriebe vor- oder nachgeschaltet. Bei einer vorgeschalteten Anordnung der Getriebeschaltgruppe ist eine mit der Getriebeeingangswelle verbundene Tretkurbel des Tretlagergetriebes mit der ersten Welle quasi als Getriebeeingangswelle der Getriebeschaltgruppe verbunden und die fünfte Welle der Getriebeschaltgruppe ist eingangsseitig mit dem mehrstufigen Hauptgetriebe verbunden. Es ist möglich, dass die Getriebeeingangswelle und die erste Welle einteilig oder auch mehrteilig ausgeführt sind. Bei einer nachgeschalteten Anordnung der Getriebeschaltgruppe ist die erste Welle ausgangsseitig mit dem Hauptgetriebe verbunden und die fünfte Welle der Getriebeschaltgruppe ist mit der Getriebeausgangswelle verbunden. Es ist möglich, dass die Getriebeausgangswelle und die fünfte Welle einteilig oder mehrteilig ausgeführt sind.

Bei dem vorgeschlagenen Tretlagergetriebe kann ein beliebig ausgeführtes mehrstufiges Hauptgetriebe in Planetenbauweise mit zumindest einem weiteren Planetenradsatz und zumindest zwei weiteren Schaltelementen eingesetzt werden. Vorzugsweise kann das Hauptgetriebe als Vierganggetriebe ausgeführt sein und demzufolge zwei weitere Planetenradsätze nämlich einen dritten und vierten Planetenradsatz mit vier weiteren Schaltelementen aufweisen.

Im Rahmen einer ersten Ausführung des Hauptgetriebes kann vorgesehen sein, dass ein zweites Element des vierten Planetenradsatzes mit der Getriebeeingangswelle oder mit der fünften Welle der Getriebeschaltgruppe verbunden ist, dass ein erstes Element des vierten Planetenradsatzes mit einem zweiten Element des dritten Planetenradsatzes verbunden ist, dass ein drittes Element des vierten Planetenradsatzes mit der Getriebeausgangswelle oder mit der ersten Welle der Getriebeschaltgruppe verbunden ist, dass ein erstes Element des dritten Planetenradsatzes über ein drittes als Bremse ausgeführtes Schaltelement festsetzbar ist und über ein siebentes als Kupplung oder Freilauf ausgeführtes Schaltelement mit der Getriebeeingangswelle oder mit der fünften Welle der Getriebeschaltgruppe verbindbar ist und dass ein drittes Element des dritten Planetenradsatzes über ein viertes als Bremse ausgeführtes Schaltelement festsetzbar ist und über ein achtes als Kupplung oder Freilauf ausgeführtes Schaltelement mit der Getriebeausgangswelle oder mit der ersten Welle der Getriebeschaltgruppe verbindbar ist.

Im Rahmen einer zweiten Ausführung des Hauptgetriebes kann vorgesehen sein, dass ein zweites Element des dritten Planetenradsatzes mit der Getriebeeingangswelle oder mit der fünften Welle der Getriebeschaltgruppe verbunden ist, dass ein erstes Element des dritten Planetenradsatzes mit einem zweiten Element des vierten Planetenradsatzes verbunden ist, dass ein drittes Element des dritten Planetenradsatzes mit der Getriebeausgangswelle oder mit der ersten Welle der Getriebeschaltgruppe verbunden ist, dass ein drittes Element des vierten Planetenradsatzes über ein viertes als Bremse ausgeführtes Schaltelement festsetzbar ist und über ein achtes als Kupplung oder Freilauf ausgeführtes Schaltelement mit der Getriebeeingangswelle oder mit der fünften Welle der Getriebeschaltgruppe verbindbar ist und dass ein erstes Element des vierten Planetenradsatzes über ein drittes als Bremse ausgeführtes Schaltelement festsetzbar ist und über ein siebentes als Kupplung oder Freilauf ausgeführtes Schaltelement mit der Getriebeausgangswelle oder mit der ersten Welle der Getriebeschaltgruppe verbindbar ist.

Im Rahmen einer dritten Ausführung des Hauptgetriebes kann vorgesehen sein, dass ein zweites Element des dritten Planetenradsatzes mit der Getriebeeingangswelle oder mit der fünften Welle der Getriebeschaltgruppe verbunden ist, dass ein erstes Element des dritten Planetenradsatzes mit einem zweiten Element des vierten Planetenradsatzes verbunden ist, dass ein drittes Element des dritten Planetenradsatzes mit der Getriebeausgangswelle oder mit der ersten Welle der Getriebeschaltgruppe verbunden ist, dass ein drittes Element des vierten Planetenradsatzes über ein viertes als Bremse ausgeführtes Schaltelement festsetzbar ist und über ein achtes als Kupplung oder Freilauf ausgeführtes Schaltelement mit der Getriebeeingangswelle oder mit der fünften Welle der Getriebeschaltgruppe verbindbar ist und dass ein erstes Element des vierten Planetenradsatzes über ein drittes als Bremse ausgeführtes Schaltelement festsetzbar ist und über ein siebentes als Kupplung oder Freilauf ausgeführtes Schaltelement mit dem zweiten Element des dritten Planetenradsatzes und mit der Getriebeeingangswelle oder mit der fünften Welle der Getriebeschaltgruppe verbindbar ist.

Eine bevorzugte Ausführung der Erfindung kann vorsehen, dass zumindest einer der vorgesehenen Planetenradsätze als Minus-Planetenradsatz ausgeführt ist, wodurch sich eine besonders bauraumgünstige Anordnung ergibt. Es ist auch denkbar, dass einer der Planetenradsätze als Plus-Planetenradsatz ausgeführt ist.

Ein Minus-Planetenradsatz kann bevorzugt in einen Plus-Planetenradsatz überführt werden, wenn die Planetenradträger- und Hohlradanbindung an diesem Radsatz miteinander vertauscht wird und der Betrag der Standübersetzung um 1 erhöht wird. Ein Minus-Planetenradsatz weist an seinem Planetenradträger verdrehbar gelagerte Planetenräder auf, die mit dem Sonnenrad und dem Hohlrad dieses Planetenradsatzes kämmen, sodass sich das Hohlrad bei festgehaltenem Planetenradträger und drehendem Sonnenrad in zur Sonnenraddrehrichtung entgegengesetzter Richtung dreht. Ein Plus-Planetenradsatz weist an seinem Planetenradträger verdrehbar gelagerte und miteinander in Zahneingriff stehende innere und äußere Planetenräder auf, wobei das Sonnenrad dieses Planetenradsatzes mit den inneren Planetenrädern und das Hohlrad dieses Planetenradsatzes mit den äußeren Planetenrädern kämmen, sodass sich das Hohlrad bei festgehaltenem Planetenradträger und drehendem Sonnenrad in zur Sonnenraddrehrichtung gleicher Drehrichtung dreht.

Dies bedeutet für den Fachmann, dass bei den als Minus-Planetenradsatz ausgeführten Einzelradsätzen ein erstes Element bzw. Radsatzelement als Sonnenrad, ein zweites Element als Planetenradträger bzw. Steg und ein drittes Element als Hohlrad ausgeführt sind. Ferner bedeutet dies, dass bei einem als Plus-Planetenradsatz ausgeführten Einzelradsatz das erste Element als Sonnenrad, das zweite Element als Hohlrad und das dritte Element als Planetenradträger bzw. Steg ausgeführt sind.

Ferner ist es bei dem vorgeschlagenen Tretlagergetriebe denkbar, dass Stufenplaneten sowohl bei einem Minus-Planetenradsatz als auch bei einem Plus-Planetenradsatz eingesetzt werden. Bei einem Minus-Stufenplanetenradsatz bleibt die Zuordnung der Elemente bzw. der Radsatzelemente wie bei einem konventionellen Minus-Planetenradsatz erhalten. Bei einem Plus-Stufenplanetenradsatz ist vorgesehen, dass das erste Element als erstes Sonnenrad, das zweite Element als zweites Sonnenrad und das dritte Element als Planetenradträger ausgeführt sind oder dass das erste Element als erstes Hohlrad, das zweite Element als zweites Hohlrad und das dritte Element als Planetenradträger ausgeführt sind.

Im Rahmen der vorliegenden Erfindung ist bei dem vorgeschlagenen Tretlagergetriebe mit dem Hauptgetriebe und der Getriebeschaltgruppe vorgesehen, dass das erste Schaltelement undloder das zweite Schaltelement undloder das dritte Schaltelement undloder das vierte Schaltelement jeweils als formschlüssige Bremse ausgeführt sind undloder dass das fünfte Schaltelement undloder sechste Schaltelement undloder siebente Schaltelement und/oder achte Schaltelement jeweils als Freilauf ausgeführt sind.

Die als Bremsen ausgeführten Schaltelemente werden vorzugsweise als formschlüssige Schaltelemente beispielsweise als kostengünstige Schaltklauen oder dergleichen zum Beispiel mit einem verzahnten Bremsring und einer korrespondierenden Schaltklinke ausgeführt. Bremsen als Schaltelemente haben den Vorteil, dass diese zum Betätigen von außen ohne weiteres erreichbar sind. Da die vorgesehenen Freiläufe als Kupplungen eingesetzt werden, ist es von Vorteil, wenn die Bremsen z. B. als einseitig wirkende Bremsen ausgeführt sind, um ein Verblocken des Getriebes bei Drehrichtungsumkehr am Antrieb oder am Abtrieb zu verhindern. Vorzugsweise werden als Freiläufe nicht aktiv schaltbare bzw. betätigbare Freiläufe verwendet. Dies hat den Vorteil, dass keine Schaltbetätigung bei den passiven Schaltelementen erforderlich ist. Der nicht betätigbare Freilauf überträgt ein Drehmoment, wenn dieser im Sperrrichtungszustand sperrt. In der entgegengesetzten Drehrichtung wird kein Drehmoment übertragen, da der Freilauf im Überholtriebzustand nicht sperrt. Es ist jedoch denkbar, dass auch aktiv schaltbare Freiläufe oder auch aktiv schaltbare Freilaufbremsen eingesetzt werden.

Um die Ansteuerung des vorgeschlagenen Tretlagergetriebes weiter zu optimieren, ist vorgesehen, dass zumindest ein Drehmomentsensor oder dergleichen an dem Antrieb undloder an dem Abtrieb vorgesehen ist.

Um den Antrieb bei dem vorgeschlagenen Tretlagergetriebe elektrisch zu unterstützen, kann zumindest eine elektrische Maschine oder dergleichen mit dem Antrieb bzw. mit der Tretkurbelwelle oder Getriebeeingangswelle undloder mit dem Abtrieb bzw. mit der Getriebeausgangswelle verbunden oder verbindbar sein bzw. fest oder lösbar angekoppelt sein. Vorzugsweise kann die elektrische Maschine achsparallel zur Tretkurbelwelle bzw. Getriebeeingangswelle angeordnet sein, während die Planetenradsätze koaxial zur Tretkurbelwelle bzw. Getriebeeingangswelle angeordnet sind.

Ein weiterer Aspekt der vorliegenden Erfindung beansprucht ein Fahrrad oder Pedelec mit dem vorbeschriebenen Tretlagergetriebe. Hieraus ergeben sich die bereits beschriebenen Vorteile und weitere Vorteile.

Nachfolgend wird die vorliegende Erfindung anhand der Zeichnungen weiter erläutert.

Es zeigen:
Figur 1 eine schematische Prinzipansicht einer ersten Ausführungsvariante eines erfindungsgemäßen Tretlagergetriebes an einem Fahrrad oder einem Pedelec mit einer einem Hauptgetriebe nachgeschalteten Getriebeschaltgruppe;
Figur 2 eine schematische Prinzipansicht einer zweiten Ausführungsvariante des Tretlagergetriebes mit der dem Hauptgetriebe vorgeschalteten Getriebeschaltgruppe;
Figur 3 ein Schaltschema mit vier schaltbaren Gängen der Getriebeschaltgruppe bei dem Tretlagergetriebe;
Figur 4 eine schematische Prinzipansicht eines Planetenradsatzes als Minus-Planetenradsatz;
Figur 5 eine schematische Prinzipansicht eines Planetenradsatzes als Plus-Planetenradsatz;
Figur 6 eine schematische Prinzipansicht eines Planetenradsatzes als Minus-Stufenplanetenradsatz;
Figur 7 eine schematische Prinzipansicht eines Planetenradsatzes als Plus-Stufenplanetenradsatz mit zwei Sonnenrädern;
Figur 8 eine schematische Prinzipansicht eines Planetenradsatzes als Plus-Stufenplanetenradsatz mit zwei Hohlrädern;
Figur 9 eine schematische Prinzipansicht des Tretlagergetriebes mit einer ersten Ausführung des der Getriebeschaltgruppe vorgeschalteten Hauptgetriebes als Vierganggetriebe;
Figur 10 eine schematische Prinzipansicht des Tretlagergetriebes mit in axialer Reihenfolge vertauschten Planetenradsätzen bei der ersten Ausführung des der Getriebeschaltgruppe vorgeschalteten Hauptgetriebes als Vierganggetriebe;
Figur 11 eine schematische Prinzipansicht des Tretlagergetriebes mit einer zweiten Ausführung des der Getriebeschaltgruppe vorgeschalteten Hauptgetriebes als Vierganggetriebe;
Figur 12 eine schematische Prinzipansicht des Tretlagergetriebes mit einer dritten Ausführung des der Getriebeschaltgruppe vorgeschalteten Hauptgetriebes als Vierganggetriebe;
Figur 13 ein Schaltschema des Tretlagergetriebes gemäß der Figuren 9 bis 12;
Figur 14 eine schematische Prinzipansicht des Tretlagergetriebes gemäß Figur 1 mit einem beispielhaft angedeuteten Drehmomentsensor am Antrieb;
Figur 15 eine schematische Prinzipansicht des Tretlagergetriebes gemäß Figur 14 mit einer beispielhaft am Antrieb angeordneten elektrischen Maschine;
Figur 16 eine schematische Prinzipansicht des Tretlagergetriebes gemäß Figur 14 mit einer beispielhaft am Abtrieb angeordneten elektrischen Maschine; und
Figur 17 eine schematische Prinzipansicht des Tretlagergetriebe gemäß Figur 14 mit einem zwischen der Tretkurbelwelle und der Getriebeeingangswelle vorgesehenen Freilauf.

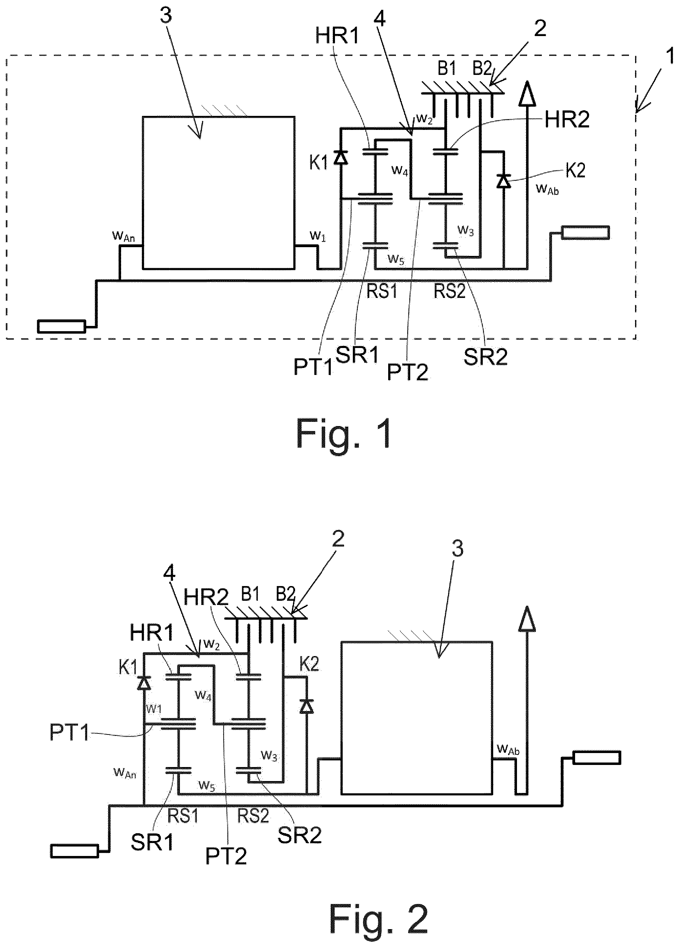

In den Figuren 1 bis 17 sind verschiedene Ausführungsvarianten und Ausführungen bzw. Schaltschemen eines erfindungsgemäßen Tretlagergetriebes in Planetenbauweise lediglich beispielhaft dargestellt. Figur 1 zeigt exemplarisch ein nur schematisch angedeutetes Fahrrad oder Pedelec 1 mit dem Tretlagergetriebe.

Das Tretlagergetriebe ist in einem Gehäuse bzw. Tretlagergehäuse 2 mit einer Tretkurbelwelle bzw. Tretkurbel mit Pedalen dargestellt, wobei die Tretkurbelwelle mit einer Getriebeeingangswelle WAn verbunden ist. Ferner umfasst das Tretlagergetriebe eine Getriebeausgangswelle WAb als Abtrieb mit einem nicht weiter dargestellten Ketten- bzw. Riemenrad. Ferner sind ein mehrstufiges Hauptgetriebe 3 und eine Getriebeschaltgruppe 4 vorgesehen, wobei die Getriebeschaltgruppe 4 einen ersten Planetenradsatz RS1 und einen zweiten Planetenradsatz RS2 sowie vier Schaltelemente B1, B2, K1, K2 aufweist. Das Hauptgetriebe 3 und die Getriebeschaltgruppe 4 bilden quasi zwei Teilgetriebe.

Unabhängig von den jeweiligen Ausführungsvarianten ist bei der Getriebeschaltgruppe 4 vorgesehen, dass ein zweites Element des ersten Planetenradsatzes RS1 mit einer ersten Welle W1 verbunden ist, wobei die erste Welle W1 mit der Getriebeeingangswelle WAn bei vorgeschalteter Getriebeschaltgruppe 4 oder ausgangsseitig mit dem Hauptgetriebe 3 bei nachgeschalteter Getriebeschaltgruppe 4 verbunden ist, wobei ein drittes Element des ersten Planetenradsatzes RS1 über eine vierte Welle W4 mit einem zweiten Element des zweiten Planetenradsatzes RS2 verbunden ist, wobei ein erstes Element des ersten Planetenradsatzes RS1 mit einer fünften Welle W5 verbunden ist, wobei die fünfte Welle W5 mit der Getriebeausgangswelle WAb bei nachgeschalteter Getriebeschaltgruppe 4 oder eingangsseitig mit dem Hauptgetriebe 3 bei vorgeschalteter Getriebeschaltgruppe 4 verbunden ist, wobei ein erstes Element des zweiten Planetenradsatzes RS2 über eine dritte Welle W3 und über ein zweites als Bremse ausgeführtes Schaltelement B2 festsetzbar ist, wobei die dritte Welle W3 über ein sechstes als Kupplung oder Freilauf ausgeführtes Schaltelement K2 mit der fünften Welle W5 verbindbar ist, wobei ein drittes Element des zweiten Planetenradsatzes RS2 über eine zweite Welle W2 und über ein erstes als Bremse ausgeführtes Schaltelement B1 festsetzbar ist und wobei die zweite Welle W2 über ein fünftes als Kupplung oder Freilauf ausgeführtes Schaltelement K1 mit der ersten Welle W1 verbindbar ist.

In den Figuren 1 und 2 sind die beiden vorgesehenen Planetenradsätze RS1, RS2, jeweils als bauraumgünstige Minus-Planetenradsätze ausgeführt. Hierbei ist vorgesehen, dass jeweils als erstes Element ein Sonnenrad SR1, SR2 als zweites Element ein Planetenradträger PT1, PT2 und als drittes Element ein Hohlrad HR1, HR2 bei den Planetenradsätzen RS1, RS2 vorgesehen sind.

In Figur 1 ist eine erste Ausführungsvariante des Tretlagergetriebes dargestellt, bei der die Getriebeschaltgruppe 4 dem mehrstufigen Hauptgetriebe 3 nachgeschaltet ist. Im Detail ist bei der ersten Ausführungsvariante gemäß Figur 1 vorgesehen, dass der Planetenradträger PT1 des ersten Planetenradsatzes RS1 mit der ersten Welle W1 verbunden ist, dass die erste Welle W1 ausgangsseitig mit dem Hauptgetriebe 3 verbunden ist, dass das Hohlrad HR1 des ersten Planetenradsatzes RS1 über die vierte Welle W4 mit dem Planetenradträger PT2 des zweiten Planetenradsatzes RS2 verbunden ist, dass das Sonnenrad SR1 des ersten Planetenradsatzes RS1 mit der fünften Welle W5 verbunden ist, dass die fünfte Welle W5 mit der Getriebeausgangswelle WAb verbunden ist, dass das Sonnenrad SR2 des zweiten Planetenradsatzes RS2 über die dritte Welle W3 und über das zweite als Bremse ausgeführte Schaltelement B2 an dem Gehäuse 2 festsetzbar ist, dass die dritte Welle W3 über das sechste als Kupplung oder Freilauf ausgeführte Schaltelement K2 mit der fünften Welle W5 verbindbar ist, dass das Hohlrad HR2 des zweiten Planetenradsatzes RS2 über die zweite Welle W2 und über das erste als Bremse ausgeführte Schaltelement B1 an dem Gehäuse 2 festsetzbar ist und wobei die zweite Welle W2 über das fünfte als Kupplung oder Freilauf ausgeführte Schaltelement K1 mit der ersten Welle W1 verbindbar ist.

In Figur 2 ist eine zweite Ausführungsvariante des Tretlagergetriebes dargestellt, bei der die Getriebeschaltgruppe 4 dem mehrstufigen Hauptgetriebe 3 vorgeschaltet ist. Im Detail ist bei der zweiten Ausführungsvariante gemäß Figur 2 vorgesehen, dass der Planetenradträger PT1 des ersten Planetenradsatzes RS1 über die erste Welle W1 oder direkt mit der Getriebeeingangswelle Wan verbunden ist, dass das Hohlrad HR1 des ersten Planetenradsatzes RS1 über die vierte Welle W4 mit dem Planetenradträger PT2 des zweiten Planetenradsatzes RS2 verbunden ist, dass das Sonnenrad SR1 des ersten Planetenradsatzes RS1 mit der fünften Welle W5 verbunden ist, dass die fünfte Welle W5 eingangsseitig mit dem Hauptgetriebe 3 verbunden ist, dass das Sonnenrad SR2 des zweiten Planetenradsatzes RS2 über die dritte Welle W3 und über das zweite als Bremse ausgeführte Schaltelement B2 an dem Gehäuse 2 festsetzbar ist, dass die dritte Welle W3 über das sechste als Kupplung oder Freilauf ausgeführte Schaltelement K2 mit der fünften Welle W5 verbindbar ist, dass das Hohlrad HR2 des zweiten Planetenradsatzes RS2 über die zweite Welle W2 und über das erste als Bremse ausgeführte Schaltelement B1 an dem Gehäuse 2 festsetzbar ist und wobei die zweite Welle W2 über das fünfte als Kupplung oder Freilauf ausgeführte Schaltelement K1 mit der ersten Welle W1 oder direkt mit der Getriebeeingangswelle Wan verbunden ist.

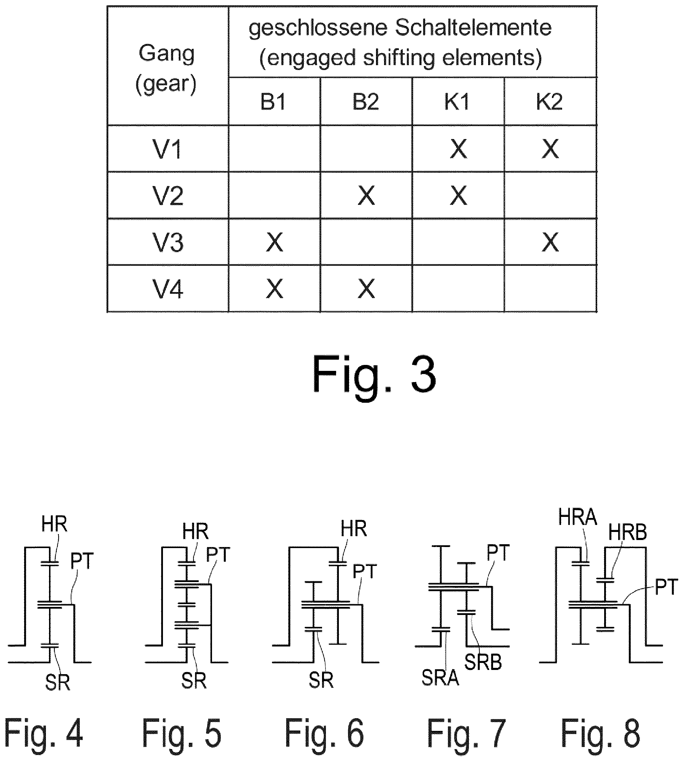

In Figur 3 ist ein Schaltschema für die Getriebeschaltgruppe 4 als Vierganggetriebe dargestellt. Hieraus ergibt sich, dass durch die Getriebeschaltgruppe vier Gänge V1, V2, V3, V4 realisierbar sind. In dem Schaltschema sind die für den jeweiligen Gang V1, V2, V3, V4 verwendeten Schaltelemente B1, B2, K1, K2 angegeben. Hierbei bedeutet ein X bei den Freiläufen K1, K2 als Schaltelemente in dem Schaltschema, dass die Freiläufe sperren. Dies funktioniert selbsttätig ohne äußere Betätigung. Ferner bedeutet ein X bei einer Bremse B1, B2 als Schaltelement in dem Schaltschema, dass die Bremse B1, B2 geschlossen ist. Dies funktioniert über eine geeignete Aktuatorik.

Im Einzelnen ergibt sich aus dem Schaltschema gemäß Figur 3, dass zum Schalten eines ersten Ganges V1 das erste als Bremse ausgeführte Schaltelement B1 und das zweite als Bremse ausgeführte Schaltelement B2 geöffnet sind, wobei das fünfte als Freilauf ausgeführte Schaltelement K1 und das sechste als Freilauf ausgeführte Schaltelement K2 sperren, dass zum Schalten eines zweiten Ganges V2 das erste als Bremse ausgeführte Schaltelement B1 geöffnet und das zweite als Bremse ausgeführte Schaltelement B2 geschlossen ist, wobei das fünfte als Freilauf ausgeführte Schaltelement K1 sperrt und das sechste als Freilauf ausgeführte Schaltelement K2 nicht sperrt, dass zum Schalten eines dritten Ganges V3 das erste als Bremse ausgeführte Schaltelement B1 geschlossen und das zweite als Bremse ausgeführte Schaltelement B2 geöffnet ist, wobei das fünfte als Freilauf ausgeführte Schaltelement K1 nicht sperrt und das sechste als Freilauf ausgeführte Schaltelement K2 sperrt, undloder dass zum Schalten eines vierten Ganges V4 das erste als Bremse ausgeführte Schaltelement B1 und das zweite als Bremse ausgeführte Schaltelement B2 geschlossen sind, wobei das fünfte als Freilauf ausgeführte Schaltelement K1 und das sechste als Freilauf ausgeführte Schaltelement K2 nicht sperren.

In Figur 4 ist beispielhaft ein Minus-Planetenradsatz dargestellt, bei dem das erste Element als Sonnenrad 1-SR, das zweite Element als Planetenradträger 2-PT und das dritte Element als Hohlrad 3-HR ausgeführt sind.

In Figur 5 ist beispielhaft ein Plus-Planetenradsatz dargestellt, bei dem das erste Element als Sonnenrad 1-SR, das zweite Element als Hohlrad 2-HR und das dritte Element als Planetenradträger 3-PT ausgeführt sind.

In Figur 6 ist beispielhaft ein Minus-Stufenplanetenradsatz dargestellt, bei dem das erste Element als Sonnenrad 1-SR, das zweite Element als Planetenradträger 2-PT und das dritte Element als Hohlrad 3-HR ausgeführt sind.

In Figur 7 ist beispielhaft ein Plus-Stufenplanetenradsatz dargestellt, bei dem das erste Element als erstes Sonnenrad 1-SRA, das zweite Element als zweites Sonnenrad 2-SRB und das dritte Element als Planetenradträger 3-PT ausgeführt sind.

In Figur 8 ist beispielhaft eine weitere Ausführung eines Plus-Stufenplanetenradsatzes dargestellt, bei dem das erste Element als erstes Hohlrad 1-HRA, das zweite Element als zweites Hohlrad 2-HRB und das dritte Element als Planetenradträger 3-PT ausgeführt sind.

Die in den Figuren 4 bis 8 dargestellten möglichen Ausführungen anhand eines Planetenradsatzes sind auf die konkreten Planetenradsätze RS1, RS2, RS3, RS4 des erfindungsgemäßen Tretlagergetriebes umsetzbar.

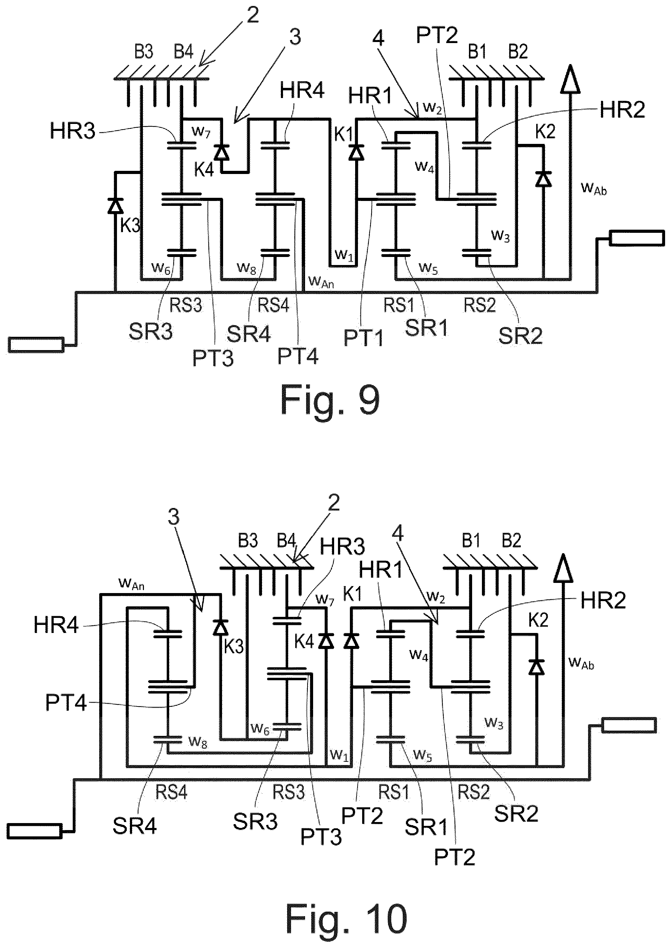

In den Figuren 9 bis 12 sind beispielhaft drei verschiedene Ausführungen des der Getriebeschaltgruppe 4 vorgeschalteten Hauptgetriebes 3 als Vierganggetriebe dargestellt. Es ist jedoch ohne weiteres möglich, dass das Hauptgetriebe 3 der Getriebeschaltgruppe 4 nachgeschaltet wird. Vorzugsweise umfasst das Hauptgetriebe 3 einen dritten Planetenradsatz RS3 und einen vierten Planetenradsatz RS4 sowie vier Schaltelemente B3, B4, K3, K4.

Die beiden Darstellungen einer ersten Ausführung gemäß Figur 9 und gemäß Figur 10 unterscheiden sich lediglich dadurch, dass die axiale Reihenfolge des dritten Planetenradsatzes RS3 und des vierten Planetenradsatzes RS4 vertauscht sind.

Bei der ersten, zweiten und dritten Ausführung des Hauptgetriebes 3 gemäß Figuren 9 bis 12 sind die vorgesehenen Planetenradsätze RS1, RS2, RS3, RS4 des Hauptgetriebes 3 und der Getriebeschaltgruppe 4 bei dem vorgeschlagenen Tretlagergetriebe jeweils als bauraumgünstige Minus-Planetenradsätze beispielhaft ausgeführt. Hierbei ist vorgesehen, dass jeweils als erstes Element ein Sonnenrad SR1, SR2, SR3, SR4, als zweites Element ein Planetenradträger PT1, PT2, PT3, PT4 und als drittes Element ein Hohlrad HR1, HR2, HR3, HR4 bei den Planetenradsätzen RS1, RS2, RS3, RS4 vorgesehen sind.

Bei der ersten Ausführung des Hauptgetriebes gemäß Figuren 9 und 10 ist im Detail vorgesehen, dass ein Planetenradträger PT4 des vierten Planetenradsatzes RS4 mit der Getriebeeingangswelle WAn verbunden ist, dass ein Sonnenrad SR4 des vierten Planetenradsatzes RS4 über eine achte Welle W8 mit einem Planetenradträger PT3 des dritten Planetenradsatzes RS3 verbunden ist, dass ein Hohlrad HR4 des vierten Planetenradsatzes RS4 mit der ersten Welle W1 der Getriebeschaltgruppe 4 verbunden ist, dass ein Sonnenrad SR3 des dritten Planetenradsatzes RS3 über eine sechste Welle W6 und über ein drittes als Bremse ausgeführtes Schaltelement B3 an dem Gehäuse 2 festsetzbar ist und über ein siebentes als Kupplung oder Freilauf ausgeführtes Schaltelement K3 mit der Getriebeeingangswelle WAn verbindbar ist und dass ein Hohlrad HR3 des dritten Planetenradsatzes RS3 über eine siebente Welle W7 und über ein viertes als Bremse ausgeführtes Schaltelement B4 an dem Gehäuse 2 festsetzbar ist und über ein achtes als Kupplung oder Freilauf ausgeführtes Schaltelement K4 mit der ersten Welle W1 der Getriebeschaltgruppe 4 verbindbar ist. Die Anbindungen der beiden Planetenradsätze RS1 und RS2 der Getriebeschaltgruppe 4 wurden bereits beschrieben.

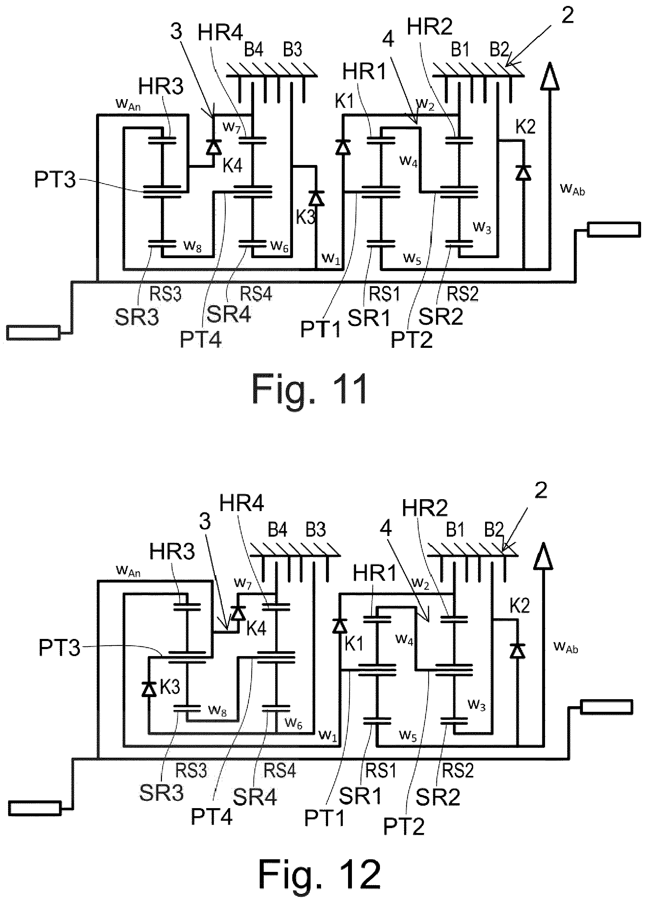

Bei der zweiten Ausführung des Hauptgetriebes 3 gemäß Figur 11 ist im Detail vorgesehen, dass ein Planetenradträger PT3 des dritten Planetenradsatzes RS3 mit der Getriebeeingangswelle WAn verbunden ist, dass ein Sonnenrad SR3 des dritten Planetenradsatzes RS3 über eine achte Welle W8 mit einem Planetenradträger PT4 des vierten Planetenradsatzes RS4 verbunden ist, dass ein Hohlrad HR3 des dritten Planetenradsatzes RS3 mit der ersten Welle W1 der Getriebeschaltgruppe 4 verbunden ist, dass ein Hohlrad HR4 des vierten Planetenradsatzes RS4 über eine siebente Welle W7 und über ein viertes als Bremse ausgeführtes Schaltelement B4 an dem Gehäuse 2 festsetzbar ist und über ein achtes als Kupplung oder Freilauf ausgeführtes Schaltelement K4 mit der Getriebeeingangswelle WAn verbindbar ist und dass ein Sonnenrad SR4 des vierten Planetenradsatzes RS4 über eine sechste Welle W6 und über ein drittes als Bremse ausgeführtes Schaltelement B3 an dem Gehäuse 2 festsetzbar ist und über ein siebentes als Kupplung oder Freilauf ausgeführtes Schaltelement K3 mit der ersten Welle W1 der Getriebeschaltgruppe 4 verbindbar ist. Die Anbindungen der beiden Planetenradsätze RS1 und RS2 der Getriebeschaltgruppe 4 wurden bereits beschrieben.

Bei der dritten Ausführung des Hauptgetriebes 3 gemäß Figur 12 ist im Detail vorgesehen, dass ein Planetenradträger PT3 des dritten Planetenradsatzes RS3 mit der Getriebeeingangswelle WAn verbunden ist, dass ein Sonnenrad SR3 des dritten Planetenradsatzes RS3 über eine achte Welle W8 mit einem Planetenradträger PT4 des vierten Planetenradsatzes RS4 verbunden ist, dass ein Hohlrad HR3 des dritten Planetenradsatzes RS3 mit der ersten Welle W1 der Getriebeschaltgruppe 4 verbunden ist, dass ein Hohlrad HR4 des vierten Planetenradsatzes RS4 über eine siebente Welle W7 und über ein viertes als Bremse ausgeführtes Schaltelement B4 an dem Gehäuse 2 festsetzbar ist und über ein achtes als Kupplung oder Freilauf ausgeführtes Schaltelement K4 mit der Getriebeeingangswelle WAn verbindbar ist und dass ein Sonnenrad SR4 des vierten Planetenradsatzes RS4 über eine sechste Welle W6 und über ein drittes als Bremse ausgeführtes Schaltelement B3 an dem Gehäuse 2 festsetzbar ist und über ein siebentes als Kupplung oder Freilauf ausgeführtes Schaltelement K3 mit dem Planetenradträger PT3 des dritten Planetenradsatzes RS3 verbindbar ist. Die Anbindungen der beiden Planetenradsätze RS1 und RS2 der Getriebeschaltgruppe 4 wurden bereits beschrieben.

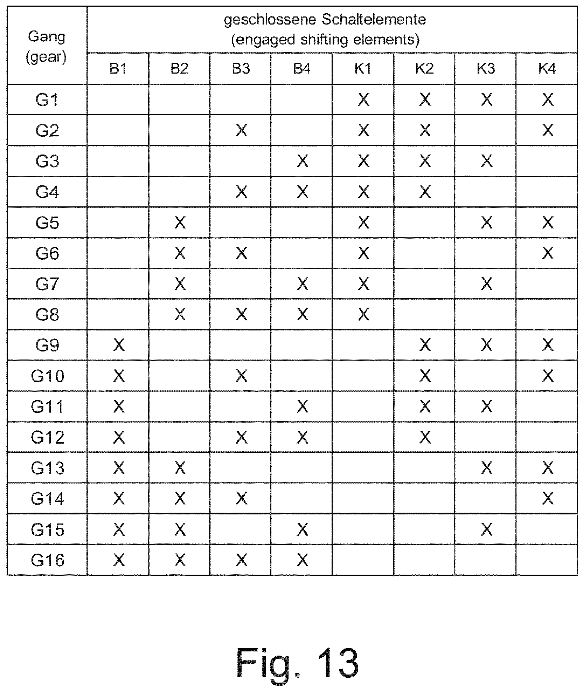

In Figur 13 ist beispielhaft ein Schaltschema für die in den Figuren 9 bis 12 gezeigten Ausführungen des erfindungsgemäßen Tretlagergetriebes dargestellt. Dadurch, dass die Getriebeschaltgruppe 4 viergängig und das Hauptgetriebe 4 viergängig ist, ergeben sich insgesamt 4x4 = 16 schaltbare Gänge G1 bis G16. In dem Schaltschema sind die für den jeweiligen Gang G1 bis G16 verwendeten Schaltelemente B1, B2, B3, B4, K1, K2, K3, K4 angegeben. Hierbei bedeutet ein X bei einem Freilauf K1, K2, K3, K4 als Schaltelement in dem Schaltschema, dass der Freilauf sperrt. Dies funktioniert selbsttätig ohne äußere Betätigung. Ferner bedeutet ein X bei einer Bremse B1, B2, B3, B4 als Schaltelement in dem Schaltschema, dass die Bremse B1, B2, B3, B4 geschlossen ist. Dies funktioniert über eine geeignete Aktuatorik.

Im Einzelnen ergibt sich aus dem Schaltschema gemäß Figur 13, dass zum Realisieren eines ersten Ganges G1 das erste als Bremse ausgeführte Schaltelement B1, das zweite als Bremse ausgeführte Schaltelement B2, das dritte als Bremse ausgeführte Schaltelement B3 und das vierte als Bremse ausgeführte Schaltelement B4 geöffnet sind, wobei das fünfte als Freilauf ausgeführte Schaltelement K1, das sechste als Freilauf ausgeführte Schaltelement K2, das siebente als Freilauf ausgeführte Schaltelement K3 und das achte als Freilauf ausgeführte Schaltelement K4 sperren, dass zum Realisieren eines zweiten Ganges G2 das erste als Bremse ausgeführte Schaltelement B1, das zweite als Bremse ausgeführte Schaltelement B2 und das vierte als Bremse ausgeführte Schaltelement B4 geöffnet sind sowie das dritte als Bremse ausgeführte Schaltelement B3 geschlossen ist, wobei das fünfte als Freilauf ausgeführte Schaltelement K1, das sechste als Freilauf ausgeführte Schaltelement K2 und das achte als Freilauf ausgeführte Schaltelement K4 sperren sowie das siebente als Freilauf ausgeführte Schaltelement K3 nicht sperrt, dass zum Realisieren eines dritten Ganges G3 das erste als Bremse ausgeführte Schaltelement B1, das zweite als Bremse ausgeführte Schaltelement B2 und das dritte als Bremse ausgeführte Schaltelement B3 geöffnet sind sowie das vierte als Bremse ausgeführte Schaltelement B4 geschlossen ist, wobei das fünfte als Freilauf ausgeführte Schaltelement K1, das sechste als Freilauf ausgeführte Schaltelement K2 und das siebente als Freilauf ausgeführte Schaltelement K3 sperren sowie das achte als Freilauf ausgeführte Schaltelement K4 nicht sperrt, dass zum Realisieren eines vierten Ganges G4 das erste als Bremse ausgeführte Schaltelement B1 und das zweite als Bremse ausgeführte Schaltelement B2 geöffnet sind sowie das dritte als Bremse ausgeführte Schaltelement B3 und das vierte als Bremse ausgeführte Schaltelement B4 geschlossen sind, wobei das fünfte als Freilauf ausgeführte Schaltelement K1 und das sechste als Freilauf ausgeführte Schaltelement K2 sperren sowie das siebente als Freilauf ausgeführte Schaltelement K3 und das achte als Freilauf ausgeführte Schaltelement K4 nicht sperren, dass zum Realisieren eines fünften Ganges G5 das erste als Bremse ausgeführte Schaltelement B1, das dritte als Bremse ausgeführte Schaltelement B3 und das vierte als Bremse ausgeführte Schaltelement B4 geöffnet sind und das zweite als Bremse ausgeführte Schaltelement B2 geschlossen ist, wobei das fünfte als Freilauf ausgeführte Schaltelement K1, das siebente als Freilauf ausgeführte Schaltelement K3 und das achte als Freilauf ausgeführte Schaltelement K4 sperren sowie das sechste als Freilauf ausgeführte Schaltelement K2 nicht sperrt, dass zum Realisieren eines sechsten Ganges G6 das erste als Bremse ausgeführte Schaltelement B1 und das vierte als Bremse ausgeführte Schaltelement B4 geöffnet sind sowie das zweite als Bremse ausgeführte Schaltelement B2 und das dritte als Bremse ausgeführte Schaltelement B3 geschlossen sind, wobei das fünfte als Freilauf ausgeführte Schaltelement K1 und das achte als Freilauf ausgeführte Schaltelement K4 sperren sowie das sechste als Freilauf ausgeführte Schaltelement K2 und das siebente als Freilauf ausgeführte Schaltelement K3 nicht sperren, dass zum Realisieren eines siebenten Ganges G7 das erste als Bremse ausgeführte Schaltelement B1 und das dritte als Bremse ausgeführte Schaltelement B3 geöffnet sind sowie das zweite als Bremse ausgeführte Schaltelement B2 und das vierte als Bremse ausgeführte Schaltelement B4 geschlossen sind, wobei das fünfte als Freilauf ausgeführte Schaltelement K1 und das siebente als Freilauf ausgeführte Schaltelement K3 sperren sowie das sechste als Freilauf ausgeführte Schaltelement K2 und das achte als Freilauf ausgeführte Schaltelement K4 nicht sperren, wobei zum Realisieren eines achten Ganges G8 das erste als Bremse ausgeführte Schaltelement B1 geöffnet ist sowie das zweite als Bremse ausgeführte Schaltelement B2, das dritte als Bremse ausgeführte Schaltelement B3 und das vierte als Bremse ausgeführte Schaltelement B4 geschlossen sind, wobei das fünfte als Freilauf ausgeführte Schaltelement K1 sperrt sowie das sechste als Freilauf ausgeführte Schaltelement K2, das siebente als Freilauf ausgeführte Schaltelement K3 und das achte als Freilauf ausgeführte Schaltelement K4 nicht sperren, dass zum Realisieren eines neunten Ganges G9 das erste als Bremse ausgeführte Schaltelement B1 geschlossen ist sowie das zweite als Bremse ausgeführte Schaltelement B2, das dritte als Bremse ausgeführte Schaltelement B3 und das vierte als Bremse ausgeführte Schaltelement B4 geöffnet sind, wobei das fünfte als Freilauf ausgeführte Schaltelement K1 nicht sperrt sowie das sechste als Freilauf ausgeführte Schaltelement K2, das siebente als Freilauf ausgeführte Schaltelement K3 und das achte als Freilauf ausgeführte Schaltelement K4 sperren, dass zum Realisieren eines zehnten Ganges G10 das erste als Bremse ausgeführte Schaltelement B1 und das dritte als Bremse ausgeführte Schaltelement B3 geschlossen sind sowie das zweite als Bremse ausgeführte Schaltelement B2 und das vierte als Bremse ausgeführte Schaltelement B4 geöffnet sind, wobei das fünfte als Freilauf ausgeführte Schaltelement K1 und das siebente als Freilauf ausgeführte Schaltelement K3 nicht sperren sowie das sechste als Freilauf ausgeführte Schaltelement K2 und das achte als Freilauf ausgeführte Schaltelement K4 sperren, dass zum Realisieren eines elften Ganges G11 das erste als Bremse ausgeführte Schaltelement B1 und das vierte als Bremse ausgeführte Schaltelement B4 geschlossen sind sowie das zweite als Bremse ausgeführte Schaltelement B2 und das dritte als Bremse ausgeführte Schaltelement B3 geöffnet sind, wobei das fünfte als Freilauf ausgeführte Schaltelement K1 und das achte als Freilauf ausgeführte Schaltelement K4 nicht sperren sowie das sechste als Freilauf ausgeführte Schaltelement K2 und das siebente als Freilauf ausgeführte Schaltelement K3 sperren, dass zum Realisieren eines zwölften Ganges G12 das erste als Bremse ausgeführte Schaltelement B1, das dritte als Bremse ausgeführte Schaltelement B3 und das vierte als Bremse ausgeführte Schaltelement B4 geschlossen sind sowie das zweite als Bremse ausgeführte Schaltelement B2 geöffnet ist, wobei das fünfte als Freilauf ausgeführte Schaltelement K1, das siebente als Freilauf ausgeführte Schaltelement K3 und das achte als Freilauf ausgeführte Schaltelement K4 nicht sperren sowie das sechste als Freilauf ausgeführte Schaltelement K2 sperrt, dass zum Realisieren eines dreizehnten Ganges G13 das erste als Bremse ausgeführte Schaltelement B1 und das zweite als Bremse ausgeführte Schaltelement B2 geschlossen sind sowie das dritte als Bremse ausgeführte Schaltelement B3 und das vierte als Bremse ausgeführte Schaltelement B4 geöffnet sind, wobei das fünfte als Freilauf ausgeführte Schaltelement K1 und das sechste als Freilauf ausgeführte Schaltelement K2 nicht sperren sowie das siebente als Freilauf ausgeführte Schaltelement K3 und das achte als Freilauf ausgeführte Schaltelement K4 sperren, dass zum Realisieren eines vierzehnten Ganges G14 das erste als Bremse ausgeführte Schaltelement B1, das zweite als Bremse ausgeführte Schaltelement B2 und das dritte als Bremse ausgeführte Schaltelement B3 geschlossen sind sowie das vierte als Bremse ausgeführte Schaltelement B4 geöffnet ist, wobei das fünfte als Freilauf ausgeführte Schaltelement K1, das sechste als Freilauf ausgeführte Schaltelement K2 und das siebente als Freilauf ausgeführte Schaltelement K3 nicht sperren sowie das achte als Freilauf ausgeführte Schaltelement K4 sperrt, dass zum Realisieren eines fünfzehnten Ganges G15 das erste als Bremse ausgeführte Schaltelement B1, das zweite als Bremse ausgeführte Schaltelement B2 und das vierte als Bremse ausgeführte Schaltelement B4 geschlossen sind sowie das dritte als Bremse ausgeführte Schaltelement B3 geöffnet ist, wobei das fünfte als Freilauf ausgeführte Schaltelement K1, das sechste als Freilauf ausgeführte Schaltelement K2 und das achte als Freilauf ausgeführte Schaltelement K4 nicht sperren sowie das siebente als Freilauf ausgeführte Schaltelement K3 sperrt, undloder dass zum Realisieren eines sechzehnten Ganges G16 das erste als Bremse ausgeführte Schaltelement B1, das zweite als Bremse ausgeführte Schaltelement B2, das dritte als Bremse ausgeführte Schaltelement B3 und das vierte als Bremse ausgeführte Schaltelement B4 geschlossen sind, wobei das fünfte als Freilauf ausgeführte Schaltelement K1, das sechste als Freilauf ausgeführte Schaltelement K2, das siebente als Freilauf ausgeführte Schaltelement K3 und das achte als Freilauf ausgeführte Schaltelement K4 nicht sperren.

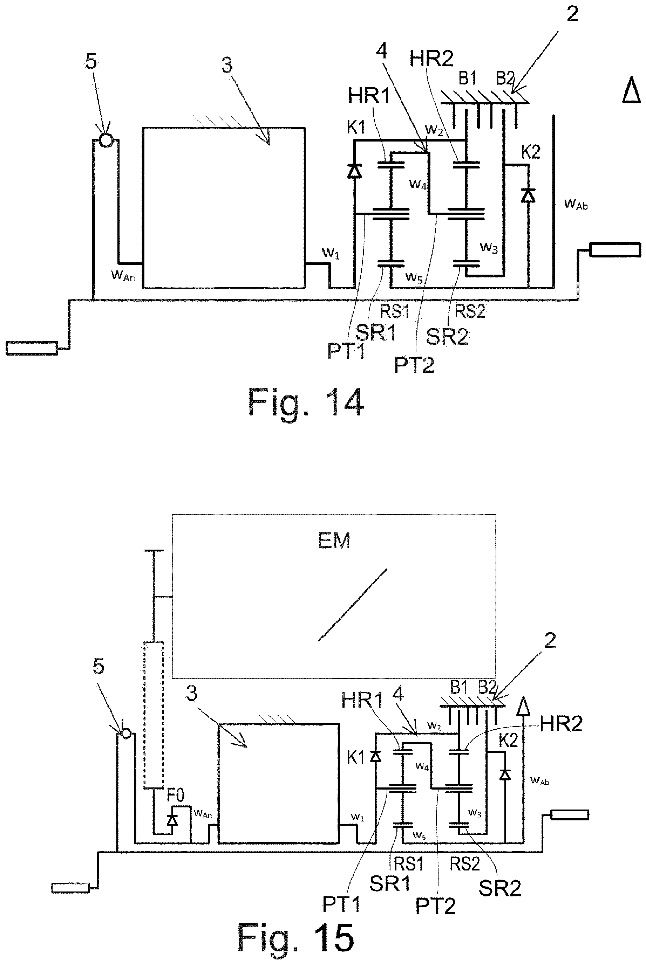

In Figur 14 ist eine Ausführung des erfindungsgemäßen Tretlagergetriebes anhand der ersten Ausführungsvariante gezeigt, bei der ein Drehmomentsensor 5 mit der Tretkurbelwelle bzw. mit der Getriebeeingangswelle WAn verbunden bzw. verbindbar ist. Beispielsweise kann ein scheibenförmiger Drehmomentsensor 5 am Getriebeeingang angeordnet werden. Der Drehmomentsensor 5 kann jedoch auch auf andere Art und Weise ausgeführt werden.

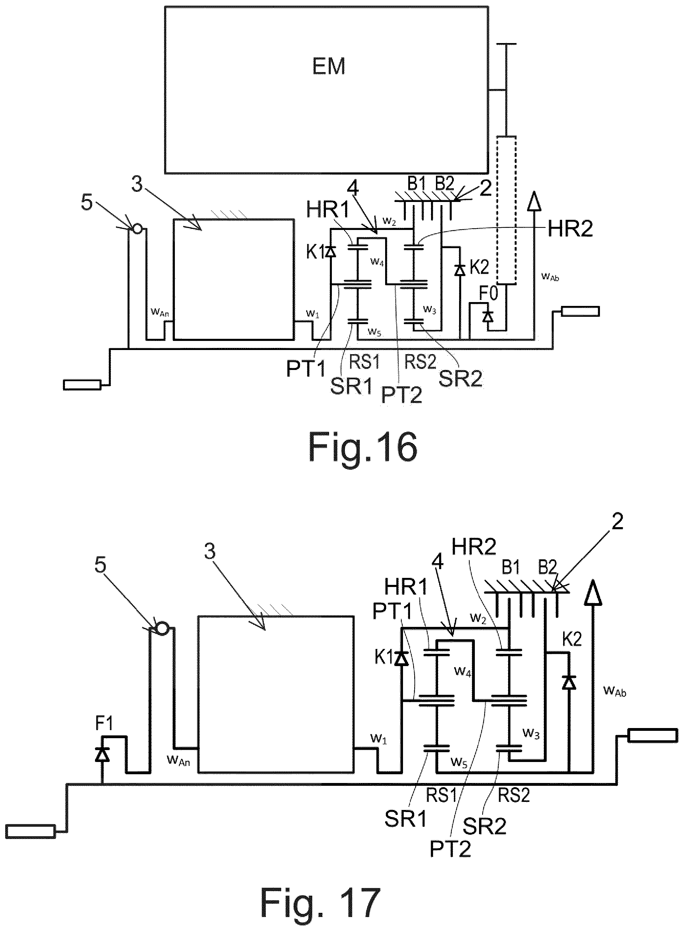

In den Figuren 15 und 16 ist jeweils eine Ausführung des erfindungsgemäßen Tretlagergetriebes anhand der ersten Ausführungsvariante mit einer zusätzlichen elektrischen Maschine EM dargestellt. Die elektrische Maschine EM kann an der Tretkurbelwelle WAn angebunden werden, wie dies in Figur 15 angedeutet ist. Es ist auch denkbar, dass die elektrische Maschine EM an der Getriebeausgangswelle WAb angebunden wird, wie dies in Figur 16 gezeigt ist. Die elektrische Maschine EM ist vorzugsweise achsparallel zur Tretkurbelwelle bzw. Getriebeeingangswelle Wan angeordnet. Es wäre jedoch auch eine koaxiale Anordnung der elektrischen Maschine EM zur Tretkurbelwelle möglich. Unabhängig, davon ist es vorteilhaft, die elektrische Maschine EM über einen Freilauf F0 oder dergleichen anzubinden, damit beim Betrieb ohne die elektrische Maschine EM keine Verluste durch die mitdrehende elektrische Maschine EM verursacht werden.

In Figur 17 ist eine Ausführung des erfindungsgemäßen Tretlagergetriebes anhand der ersten Ausführungsvariante mit einem zusätzlichen Freilauf F1 zwischen der Tretkurbelwelle und der Getriebeeingangswelle WAn dargestellt. Auf diese Weise kann bei Tretunterbrechung der Freilauf öffnen und entkoppelt die Tretkurbelwelle von den Trägheitsmassen des Getrieberadsatzes und insbesondere der elektrischen Maschine EM, sodass am Pedal keine Massenkräfte spürbar sind.

### Bezugszeichen

- 1: Fahrrad oder Pedelec
- 2: Gehäuse bzw. Tretlagergehäuse
- 3: mehrstufiges Hauptgetriebe
- 4: Getriebeschaltgruppe
- 5: Drehmomentsensor
- EM: elektrische Maschine
- F0: Freilauf für elektrische Maschine
- F1: zusätzlicher Freilauf
- SR1: Sonnenrad des ersten Planetenradsatzes
- PT1: Planetenradträger des ersten Planetenradsatzes
- HR1: Hohlrad des ersten Planetenradsatzes
- SR2: Sonnenrad des zweiten Planetenradsatzes
- PT2: Planetenradträger des zweiten Planetenradsatzes
- HR2: Hohlrad des zweiten Planetenradsatzes
- SR3: Sonnenrad des dritten Planetenradsatzes
- PT3: Planetenradträger des dritten Planetenradsatzes
- HR3: Hohlrad des dritten Planetenradsatzes
- SR4: Sonnenrad des vierten Planetenradsatzes
- PT4: Planetenradträger des vierten Planetenradsatzes
- HR4: Hohlrad des vierten Planetenradsatzes
- SRA: erstes Sonnenrad bei Plus-Stufenradsatz
- SRB: zweites Sonnenrad bei Plus-Stufenradsatz
- HRA: erstes Hohlrad bei Plus-Stufenradsatz
- HRB: zweites Hohlrad bei Plus-Stufenradsatz
- RS1: erster Planetenradsatz
- RS2: zweiter Planetenradsatz
- RS3: dritter Planetenradsatz
- RS4: vierter Planetenradsatz
- WAn: Tretkurbelwelle
- WAb: Getriebeausgangswelle
- W1: erste Welle
- W2: zweite Welle
- W3: dritte Welle
- W4: vierte Welle
- W5: fünfte Welle
- W6: sechste Welle
- W7: siebente Welle
- W8: achte Welle
- V1: erster Gang bei der Getriebeschaltgruppe
- V2: zweiter Gang bei der Getriebeschaltgruppe
- V3: dritter Gang bei der Getriebeschaltgruppe
- V4: vierter Gang bei der Getriebeschaltgruppe
- G1: erster Gang des Tretlagergetriebes
- G2: zweiter Gang des Tretlagergetriebes
- G3: dritter Gang des Tretlagergetriebes
- G4: vierter Gang des Tretlagergetriebes
- G5: fünfter Gang des Tretlagergetriebes
- G6: sechster Gang des Tretlagergetriebes
- G7: siebenter Gang des Tretlagergetriebes
- G8: achter Gang des Tretlagergetriebes
- G9: neunter Gang des Tretlagergetriebes
- G10: zehnter Gang des Tretlagergetriebes
- G11: elfter Gang des Tretlagergetriebes
- G12: zwölfter Gang des Tretlagergetriebes
- G13: dreizehnter Gang des Tretlagergetriebes
- G14: vierzehnter Gang des Tretlagergetriebes
- G15: fünfzehnter Gang des Tretlagergetriebes
- G16: sechszehnter Gang des Tretlagergetriebes
- B1: erstes als Bremse ausgeführtes Schaltelement
- B2: zweites als Bremse ausgeführtes Schaltelement
- B3: drittes als Bremse ausgeführtes Schaltelement
- B4: viertes als Bremse ausgeführtes Schaltelement
- K1: fünftes als Kupplung oder Freilauf ausgeführtes Schaltelement
- K2: sechstes als Kupplung oder Freilauf ausgeführtes Schaltelement
- K3: siebentes als Kupplung oder Freilauf ausgeführtes Schaltelement
- K4: achtes als Kupplung oder Freilauf ausgeführtes Schaltelement
- 1-SR: erstes Element als Sonnenrad
- 2-PT: zweites Element als Planetenradträger
- 2-HR: zweites Element als Hohlrad
- 3-HR: drittes Element als Hohlrad
- 3-PT: drittes Element als Planetenradträger
- 1-SRA: erstes Element als erstes Sonnenrad
- 2-SRB: zweites Element als zweites Sonnenrad
- 1-HRA: erstes Element als erstes Hohlrad
- 2-HRB: erstes Element als zweites Hohlrad

## Patentansprüche

1. Tretlagergetriebe in Planetenbauweise für ein Fahrrad oder ein Pedelec (1), mit einer Getriebeeingangswelle (WAn) als Antrieb, mit einer Getriebeausgangswelle (WAb) als Abtrieb, mit einem mehrstufigen Hauptgetriebe (3) und mit zumindest einer Getriebeschaltgruppe (4), wobei die Getriebeschaltgruppe (4) zwei Planetenradsätze (RS1, RS2) und vier Schaltelemente (B1, B2, K1, K2) aufweist, wobei ein zweites Element des ersten Planetenradsatzes (RS1) mit einer ersten Welle (W1) verbunden ist, wobei ein drittes Element des ersten Planetenradsatzes (RS1) über eine vierte Welle (W4) mit einem zweiten Element des zweiten Planetenradsatzes (RS2) verbunden ist, wobei ein erstes Element des ersten Planetenradsatzes (RS1) mit einer fünften Welle (W5) verbunden ist, wobei ein erstes Element des zweiten Planetenradsatzes (RS2) über eine dritte Welle (W3) und über ein zweites als Bremse ausgeführtes Schaltelement (B2) festsetzbar ist, wobei die dritte Welle (W3) über ein sechstes als Kupplung oder Freilauf ausgeführtes Schaltelement (K2) mit der fünften Welle (W5) verbindbar ist, wobei ein drittes Element des zweiten Planetenradsatzes (RS2) über eine zweite Welle (W2) und über ein erstes als Bremse ausgeführtes Schaltelement (B1) festsetzbar ist und wobei die zweite Welle (W2) über ein fünftes als Kupplung oder Freilauf ausgeführtes Schaltelement (K1) mit der ersten Welle (W1) verbindbar ist.

2. Tretlagergetriebe nach Anspruch 1, **dadurch gekennzeichnet, dass** die Getriebeschaltgruppe (4) dem Hauptgetriebe (3) vorgeschaltet oder nachgeschaltet ist.

3. Tretlagergetriebe nach einem der vorangehenden Ansprüche, **dadurch gekennzeichnet, dass** das Hauptgetriebe (3) einen dritten Planetenradsatz (RS3) undloder einen vierten Planetenradsatz (RS4) sowie zumindest zwei Schaltelemente (B3, B4, K3, K4) umfasst.

4. Tretlagergetriebe nach Anspruch 3, **dadurch gekennzeichnet, dass** ein zweites Element des vierten Planetenradsatzes (RS4) mit der Getriebeeingangswelle (WAn) oder mit der fünften Welle (W5) der Getriebeschaltgruppe (4) verbunden ist, dass ein erstes Element des vierten Planetenradsatzes (RS4) mit einem zweiten Element des dritten Planetenradsatzes (RS3) verbunden ist, dass ein drittes Element des vierten Planetenradsatzes (RS4) mit der Getriebeausgangswelle (WAb) oder mit der ersten Welle (W1) der Getriebeschaltgruppe (4) verbunden ist, dass ein erstes Element des dritten Planetenradsatzes (RS3) über ein drittes als Bremse ausgeführtes Schaltelement (B3) festsetzbar ist und über ein siebentes als Kupplung oder Freilauf ausgeführtes Schaltelement (K3) mit der Getriebeeingangswelle (WAn) oder mit der fünften Welle (W5) der Getriebeschaltgruppe (4) verbindbar ist und dass ein drittes Element des dritten Planetenradsatzes (RS3) über ein viertes als Bremse ausgeführtes Schaltelement (B4) festsetzbar ist und über ein achtes als Kupplung oder Freilauf ausgeführtes Schaltelement (K4) mit der Getriebeausgangswelle (WAb) oder mit der ersten Welle (W1) der Getriebeschaltgruppe (4) verbindbar ist.

5. Tretlagergetriebe nach Anspruch 3, **dadurch gekennzeichnet, dass** ein zweites Element des dritten Planetenradsatzes (RS3) mit der Getriebeeingangswelle (WAn) oder mit der fünften Welle (W5) der Getriebeschaltgruppe (4) verbunden ist, dass ein erstes Element des dritten Planetenradsatzes (RS3) mit einem zweiten Element des vierten Planetenradsatzes (RS4) verbunden ist, dass ein drittes Element des dritten Planetenradsatzes (RS3) mit der Getriebeausgangswelle (WAb) oder mit der ersten Welle (W1) der Getriebeschaltgruppe (4) verbunden ist, dass ein drittes Element des vierten Planetenradsatzes (RS4) über ein viertes als Bremse ausgeführtes Schaltelement (B4) festsetzbar ist und über ein achtes als Kupplung oder Freilauf ausgeführtes Schaltelement (K4) mit der Getriebeeingangswelle (WAn) oder mit der fünften Welle (W5) der Getriebeschaltgruppe (4) verbindbar ist und dass ein erstes Element des vierten Planetenradsatzes (RS4) über ein drittes als Bremse ausgeführtes Schaltelement (B3) festsetzbar ist und über ein siebentes als Kupplung oder Freilauf ausgeführtes Schaltelement (K3) mit der Getriebeausgangswelle (WAb) oder mit der ersten Welle (W1) der Getriebeschaltgruppe (4) verbindbar ist.

6. Tretlagergetriebe nach Anspruch 3, **dadurch gekennzeichnet, dass** ein zweites Element des dritten Planetenradsatzes (RS3) mit der Getriebeeingangswelle (WAn) oder mit der fünften Welle (W5) der Getriebeschaltgruppe (4) verbunden ist, dass ein erstes Element des dritten Planetenradsatzes (RS3) mit einem zweiten Element des vierten Planetenradsatzes (RS4) verbunden ist, dass ein drittes Element des dritten Planetenradsatzes (RS3) mit der Getriebeausgangswelle (WAb) oder mit der ersten Welle (W1) der Getriebeschaltgruppe (4) verbunden ist, dass ein drittes Element des vierten Planetenradsatzes (RS4) über ein viertes als Bremse ausgeführtes Schaltelement (B4) festsetzbar ist und über ein achtes als Kupplung oder Freilauf ausgeführtes Schaltelement (K4) mit der Getriebeeingangswelle (WAn) oder mit der fünften Welle (W5) der Getriebeschaltgruppe (4) verbindbar ist und dass ein erstes Element des vierten Planetenradsatzes (RS4) über ein drittes als Bremse ausgeführtes Schaltelement (B3) festsetzbar ist und über ein siebentes als Kupplung oder Freilauf ausgeführtes Schaltelement (K3) mit dem zweiten Element des dritten Planetenradsatzes (RS3) und mit der Getriebeeingangswelle (WAn) oder mit der fünften Welle (W5) der Getriebeschaltgruppe (4) verbindbar ist.

7. Tretlagergetriebe nach einem der vorangehenden Ansprüche, **dadurch gekennzeichnet, dass** zumindest einer der Planetenradsätze (RS1, RS2, RS3, RS4) als Minus-Planetenradsatz undloder als Minus-Stufenplanetenradsatz ausgeführt ist, und dass bei einem Minus-Planetenradsatz und bei einem Minus-Stufenplanetenradsatz das erste Element als Sonnenrad (SR1, SR2, SR3, SR4), das zweite Element als Planetenradträger (PT1, PT2, PT3, PT4) und das dritte Element als Hohlrad (HR1, HR2, HR3, HR4) ausgeführt sind.

8. Tretlagergetriebe nach einem der vorangehenden Ansprüche, **dadurch gekennzeichnet, dass** zumindest einer der Planetenradsätze (RS1, RS2, RS3, RS4) als Plus-Planetenradsatz ausgeführt ist und dass bei einem Plus-Planetenradsatz das erste Element als Sonnenrad (SR1, SR2, SR3, SR4), das zweite Element als Hohlrad (HR1, HR2, HR3, HR4) und das dritte Element als Planetenradträger (PT1, PT2, PT3, PT4) ausgeführt sind.

9. Tretlagergetriebe nach einem der vorangehenden Ansprüche, **dadurch gekennzeichnet, dass** zumindest einer der Planetenradsätze (RS1, RS2, RS3, RS4) als Plus-Stufenplanetenradsatz ausgeführt ist und dass bei einem Plus-Stufenplanetenradsatz das erste Element als erstes Sonnenrad (SRA), das zweite Element als zweites Sonnenrad (SRB) und das dritte Element als Planetenradträger (PT1, PT2, PT3, PT4) ausgeführt sind oder dass bei einem Plus-Stufenplanetenradsatz das erste Element als erstes Hohlrad (HRA), das zweite Element als zweites Hohlrad (HRB) und das dritte Element als Planetenradträger (PT1, PT2, PT3, PT4) ausgeführt sind.

10. Tretlagergetriebe nach einem der vorangehenden Ansprüche, **dadurch gekennzeichnet, dass** das erste Schaltelement (B1) undloder das zweite Schaltelement (B2) undloder das dritte Schaltelement (B3) undloder das vierte Schaltelement (B4) jeweils als formschlüssige Bremse ausgeführt sind undloder dass das fünfte Schaltelement (K1) undloder das sechste Schaltelement (K2) und/oder siebente Schaltelement (K3) undloder das achte Schaltelement (K4) jeweils als nicht aktiv betätigbarer Freilauf ausgeführt sind.

11. Tretlagergetriebe nach einem der vorangehenden Ansprüche, **dadurch gekennzeichnet, dass** ein Drehmomentsensor (5) mit der Getriebeeingangswelle (Wan) verbunden ist.

12. Tretlagergetriebe nach einem der vorangehenden Ansprüche, **dadurch gekennzeichnet, dass** zumindest eine elektrische Maschine (EM) mit der Getriebeeingangswelle (WAn) oder der Getriebeausgangswelle (WAb) verbunden oder verbindbar ist.

13. Tretlagergetriebe nach Anspruch 12, **dadurch gekennzeichnet, dass** die elektrische Maschine (EM) achsparallel zur Tretkurbelwelle und/oder Getriebeeingangswelle (WAn) angeordnet ist.

14. Tretlagergetriebe nach einem der vorangehenden Ansprüche, **dadurch gekennzeichnet, dass** die Planetenradsätze (RS1, RS2, RS3, RS4) koaxial zur Tretkurbelwelle und/oder Getriebeeingangswelle (Wan) angeordnet sind.

15. Fahrrad oder Pedelec (1) mit einem Tretlagergetriebe nach einem der vorangehenden Ansprüche.
